# EUROPEAN PATENT APPLICATION

(11) **EP 4 790 037 A1**
(43) Date of publication of application: **12.08.2026**
(21) Application number: 26156946.1
(22) Date of filing: 06.02.2026
(51) Int. Cl.: C04B 28/02, C04B 28/04, C04B 14/06, C04B 18/14

(54) **3D PRINTING CONCRETE MATERIAL COMPOSITION, PRODUCT THEREOF, AND MANUFACTURING METHOD OF PRODUCT**

(30) Priority: 06.02.2025 TW 114104410
(71) Applicant: TCC Group Holdings Co., Ltd., Taipei City 104 (TW)
(72) Inventor: CHIU, YU-WEN, 104 Taipei City (TW); CHIU, SHIH-EN, 104 Taipei City (TW); WU, MING-FU, 104 Taipei City (TW); TSENG, WEI-CHENG, 104 Taipei City (TW)
(74) Representative: Meissner Bolte Partnerschaft mbB

(57) **Abstract**

The disclosure provides a 3D printing concrete material composition, which includes a binder, a filler and an additive, and can be applied to non-building structural objects. The disclosure also provides a product including the 3D printing concrete material composition and a manufacturing method thereof.

## Description

### BACKGROUND OF THE INVENTION

### FIELD OF THE INVENTION

The disclosure relates to a concrete material and, in particular, to a 3D printing concrete material composition and applications thereof.

### DESCRIPTION OF THE PRIOR ART

In recent years, the construction industry has faced a growing labor shortage, while heightened global environmental awareness has spurred the development of innovative construction methods and construction automation technologies both domestically and internationally. Among these, 3D printing technology has garnered significant interest. Specifically, 3D printing concrete is becoming a prominent topic of research and application in both academic research and engineering circles globally.

3D printing is a technology that uses three-dimensional models to automatically stack materials layer by layer, also known as additive manufacturing (AM). However, applying 3D printing technology to concrete objects presents significant challenges. Because the 3D printing process does not employ temporary supports or formworks, the 3D printing material must possess low dynamic yield stress and plastic viscosity to maintain the workability of the slurry during pumping or nozzle extrusion. Once the 3D printing material begins to stack, it requires high static yield stress and rapid viscosity recovery capacity to resist its own flowability. As concrete is not a traditional 3D printing material, its material properties differ from those of conventionally used concrete. Therefore, numerous challenges regarding extrusion and shaping still need to be overcome.

Current research has involved the simulation of the 3D printing process of concrete to analyze the stress distribution and deformation of concrete objects during manufacturing. The results of these analyses are then used to optimize the process parameters such as displacement rate and extrusion rate.

The present disclosure, based on 3D printing technology, provides a building material with high strength and durability. The development of this 3D printed concrete material is driven by the objectives of achieving low pollution, low carbon emissions, and low cost.

### SUMMARY OF THE INVENTION

Based on the above reasons, the present disclosure provides a 3D printing concrete material composition and a product thereof.

In an aspect of the present disclosure, a 3D printing concrete material composition is provided. The 3D printing concrete material composition includes a binder, a filler and an additive, wherein the binder includes cement and silica fume; the filler includes quartz powder and quartz sand; and the additive includes a carboxylic acid water-reducing agent and an accelerator. The carboxylic acid water-reducing agent is present in an amount of about 0.5 wt% to about 3.0 wt% of the total weight of the binder. The accelerator ranges from about 0.5 wt% to about 5 wt % of the total weight of the binder.

Preferably, the cement is present in amount of from about 25 wt% to about 55 wt% of the total weight of the 3D printing concrete material composition, and the silica fume is present in amount of from about 1 wt% to about 15 wt% of the total weight of the 3D printing concrete material composition.

Preferably, the quartz powder is present in amount of about 1 wt% to about 20 wt% of the total weight of the 3D printing concrete material composition; and the quartz sand is present in amount of about 30 wt% to about 60 wt% of the total weight of the 3D printing concrete material composition.

Preferably, the quartz powder has a particle size distribution ranging from about 10 µm to about 80 µm.

Preferably, the quartz sand has a particle size distribution ranging from about 150 µm to about 800 µm.

Preferably, the additive further includes: a dispersant, being present in an amount of from about 0.1 wt% to about 0.8 wt% of total weight of the binder; a viscosity modifier, being present in an amount of from about 0.1 wt% to about 2.0 wt% of the total weight of the binder; and a stabilizer, being present in an amount of from about 0 wt% to about 0.3 wt% of the total weight of the binder.

In another aspect of the disclosure, a product is provided. The product includes a body having a predetermined shape; and a plurality of porous structures uniformly disposed inside the body and having the aforementioned 3D printing concrete material composition distributed therein.

Preferably, the predetermined shape includes a circle, a square, a cone, an arch, a sphere, a column, or any planar or three-dimensional shape designed according to requirements.

Preferably, the product is a non-building structural object.

Preferably, the product is an installation artwork, a permanent formwork or a dry-type externally-hung piece.

In another aspect of the disclosure, a method for manufacturing a product is provided. The method includes using the aforementioned 3D printing concrete material composition to print the product by 3D printing technology.

The aforementioned aspects of the present disclosure offer at least the following advantages:
1. The present disclosure utilizes an ultra-high performance concrete material composition as a basis for formulating the 3D printing concrete material composition. This resulting composition not only maintains 3D printing workability but also exhibits the advantages of excellent strength and toughness. It represents a technology that integrates new building materials with innovative construction methods.
2. Compared with traditional concrete objects or general 3D printing concrete, the 3D printed product made using the 3D printing concrete material composition of the present disclosure can significantly reduce the disadvantages of traditional concrete such as low compressive strength and easy cracking. Furthermore, in contrast to articles made from general 3D printed concrete, they exhibit exceptionally high toughness.
3. While the 3D printing concrete material composition of the present disclosure may have a higher cost than conventional concrete, it offers superior durability and reduced maintenance requirements. These benefits, combined with the advantage of minimized material waste inherent to the 3D printing process, result in significant long-term economic benefits.

### BRIEF DESCRIPTION OF THE DRAWINGS

FIG. 1 is a schematic diagram of a 3D printed product according to one embodiment of the disclosure.
FIG. 2 is a cross-sectional schematic diagram of the 3D printed product of FIG. 1.
FIG. 3 is a bar graph showing the relationship between the mortar volume ratio and compressive strength of cast concrete and 3D printing concrete in Comparative Example.
FIG. 4 is a schematic diagram of a 3D printed three-meter-tall dinosaur according to one embodiment of the disclosure.
FIG. 5 is a schematic diagram of a 3D printed large-scale Tai Chi standing pose according to one embodiment of the disclosure.
FIG. 6 is a schematic diagram of a 3D printed two-meter-tall spiral-shaped vase according to one embodiment of the disclosure.
FIG. 7 is a schematic diagram of a 3D printed permanent formwork according to one embodiment of the disclosure.
FIG. 8 is a schematic diagram of a 3D printed dry-type externally-hung piece (unit type) according to one embodiment of the disclosure.
FIG. 9 is a schematic diagram showing the actual presentation of a 3D-printed dry-type externally-hung piece according to an embodiment of the disclosure.
FIG. 10 is a schematic diagram of 3D-printed three-dimensional text according to an embodiment of the disclosure.
FIG. 11 is a schematic diagram of 3D-printed animal-shaped garden ornaments according to an embodiment of the disclosure.

### DETAILED DESCRIPTION OF THE EMBODIMENTS

### Definitions

The term "ultra-high performance concrete (UHPC)" as used herein refers to a composite cementitious matrix material that, compared to conventional concrete, possesses higher strength and uniformity, thereby reducing stress concentration and localized damage caused by inhomogeneity.

The term "concrete" as used herein refers to a man-made material composed of water, cement, sand, gravel, etc.

The term "cement" as used herein refers to a building material, which is hydraulic cement obtained by grinding clinker with hydraulic crystalline calcium silicate as the main component. When cement is mixed with water, a hydration reaction occurs to produce calcium silicate hydrate (C-S-H) and calcium hydroxide (Ca(OH)₂).

The term "silica fume" as used herein refers to very fine non-crystalline silicon dioxide, which is silicon or silicon-containing alloys, such as a by-product of the manufacturing process of silicon-iron alloys.

The terms "quartz powder" and "quartz granules" as used herein refer to quartz powder and granules respectively, produced by crushing and/or grinding quartz stone. The difference between the two lies in their particle size. Quartz stone is a non-metallic, hard, wear-resistant, and chemically stable silicate mineral, primarily composed of silicon dioxide.

The term "3D printing technology" as used herein refers to a technology that uses a nozzle capable of moving or being controlled in three mutually perpendicular directions (e.g., X, Y, Z axes) to spray material, creating patterns on the X-Y plane, and then layering these planar patterns in the Z-axis direction to create a three-dimensional object.

The term "non-building structural object" as used herein refers not to fixed, permanent buildings or infrastructure such as houses, bridges, roads, or skyscrapers, but to independent objects such as decorations, artworks, furniture, and formwork.

The term "permanent formwork" as used herein refers to the formwork used to support concrete during construction. This formwork is not removed after the concrete has hardened but remains as part of the structure, typically providing structural support or protection.

The term "about" as used herein is used to describe and account for small variations. For example, when used in conjunction with a numerical value, this term may refer to a range of variation less than or equal to ±10% of that numerical value, such as a range of variation less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%.

As used herein, unless the context clearly indicates otherwise, the singular terms "a" and "the" may include plural referents.

In one embodiment, a 3D printing concrete material composition includes a binder, a filler, and an additive, wherein the binder includes cement and silica fume; the filler includes quartz powder and quartz sand; and the additive includes a carboxylic acid water-reducing agent and an accelerator.

A binder is a solidifying material that binds various aggregates in concrete together to form the required strength and durability. Common binders include cement, gypsum, and lime, with cement being the most commonly used. Cement can solidify and gain strength after reacting with water, thus giving concrete or mortar structural strength. In the disclosure, the binder including cement and silica fume plays a load-bearing and reinforcing role in the 3D printing concrete material composition, enabling the fabricated large artworks or structures to possess the necessary compressive strength.

A filler refers to the fine particulate matter added to the concrete in addition to the binder. Common fillers include fine sand, mineral powder, and steel slag. The main function of the filler is to fill the voids between the binder, providing stability and improving the workability of the concrete. The filler may be used to increase the density of concrete, improve flowability, and reduce costs while reducing the amount of the binder used. In the 3D printing concrete material composition of the disclosure, the filler helps control the viscosity and flowability of the material, thereby improving the accuracy and stability of the printing process.

An additive includes at least a carboxylic acid water-reducing agent and an accelerator. The carboxylic acid water-reducing agent is a common concrete admixture that can reduce the amount of mixing water while maintaining a substantially constant slump in the concrete. The admixture can significantly improve the workability and strength of concrete. In the 3D printing concrete material composition of this embodiment, the carboxylic acid water-reducing agent can further enhance the performance of the material, especially in 3D printing technology, where the additive can ensure the stability and efficiency of the material during the printing process. The carboxylic acid water-reducing agent may include the early-strength carboxylic acid water-reducing agent.

An accelerator is an admixture that can accelerate the setting process of concrete or cement-based materials. Its main function is to increase the hydration rate of cement, thus significantly shortening the initial setting time of concrete or mortar. Common accelerators may include calcium chloride, sodium silicate, potassium silicate, sodium sulfate, aluminum sulfate, and sodium aluminate.

In one embodiment, the additive may further include a dispersant, a viscosity modifier, and/or a stabilizer.

A dispersant is a material that reduces the aggregation between components in concrete, typically a polymer or surfactant. It reduces the mutual adsorption between particles, resulting in a uniform distribution of particles in the concrete, thereby improving the workability and flowability of the material. The dispersant is mainly used to improve the flowability of concrete or mortar, reduce adhesion, and make the mixing, transportation, and construction of concrete smoother. In the 3D printing concrete material composition of this embodiment, the dispersant helps maintain the stability of the material, preventing particle deposition or uneven extrusion during the printing process, and ensuring the printing performance.

A viscosity modifier is a material that adjusts the viscosity of concrete. Common modifiers include bentonite, cellulose derivatives, etc. These materials can alter the flowability of concrete to achieve a viscosity suitable for specific construction processes. The viscosity modifier may be used to control the workability of the 3D printing concrete material composition of this embodiment, especially when precise control of material flowability or shape retention is required. For 3D printing, appropriate viscosity ensures precise bonding between layers, preventing material sagging or instability.

A stabilizer is an additive that improves the stability of concrete or materials, typically containing chemical additives such as colloids or thickeners. These additives promote concrete stability, preventing problems such as segregation, water separation, or unstable flowability during storage or use. Stability is crucial for the 3D printing concrete material composition. The stabilizer ensures consistent material performance during printing, thereby improving printing accuracy and quality, preventing material segregation or deposition, and ensuring the stability and durability of the printed structure.

In one embodiment, the cement is present in an amount of from about 25 wt% to about 55 wt%, about 30wt% to about 50wt%, about 30wt% to about 40wt%, 35wt% to about 45wt%, or about 40wt% to about 55wt% of a total weight of the 3D printing concrete material composition; the silica fume is present in an amount of from about 1wt% to about 15wt%, about 2wt% to about 8wt%, about 3wt% to about 12wt%, 5wt% to about 10wt%, or about 8wt% to about 15wt% of a total weight of the 3D printing concrete material composition; the quartz powder is present in an amount of from about 1wt% to about 20wt%, about 2 wt% to about 15 wt%, about 2 wt% to about 7 wt%, about 5 wt% to about 15 wt%, about 8 wt% to about 15 wt%, or about 5 wt% to about 10 wt% of a total weight of the 3D printing concrete material composition; and/or the quartz sand is present in an amount of from about 30 wt% to about 60 wt%, about 30 wt% to about 50 wt%, about 30 wt% to about 40 wt%, about 35 wt% to about 55 wt%, about 35 wt% to about 45 wt%, or about 40 wt% to about 50 wt% of a total weight of the 3D printing concrete material composition. In one embodiment, the carboxylic acid water-reducing agent is present in an amount of from about 0.5 wt% to about 3.0 wt%, about 0.5 wt% to about 2.5 wt%, about 1.0 wt% to about 2.5 wt%, or about 1.0 wt% to about 3.0 wt% of a total weight of the binder; and/or the accelerator is present in an amount of from about 0.5 wt% to about 5 wt%, about 0.5 wt% to about 3 wt%, about 1 wt% to about 3 wt%, or about 1 wt% to about 2 wt% of the total weight of the binder.

In one embodiment, the dispersant is present in an amount of from about 0.1wt% to about 1.0wt%, about 0.1wt% to about 0.8wt%, or about 0.3wt% to about 0.7wt% of the total weight of the binder; the viscosity modifier is present in an amount of from about 0.1wt% to about 2.0wt%, about 0.1wt% to about 1.0wt%, about 0.1wt% to about 0.5wt%, about 0.5wt% to about 1.5wt%, or about 0.5wt% to about 2.0wt% of the total weight of the binder; and/or the stabilizer is present in an amount of from about 0wt% to about 0.3wt%, about 0wt% to about 0.2wt%, about 0wt% to about 0.15wt%, about 0wt% to about 0.07wt%, about 0.05wt% to about 0.15wt%, about 0.05wt% to about 0.2wt%, or about 0.1wt% to about 0.3wt% of the total weight of the binder.

In one embodiment, a particle size distribution of the quartz powder ranges from about 10 µm to about 80 µm, preferably from about 15 µm to about 70 µm, further preferably from about 20 µm to about 60 µm, more preferably from about 25 µm to about 50 µm, and even more preferably from about 30 µm to about 40 µm.

In one embodiment, a particle size distribution of the quartz sand ranges from about 150 µm to about 800 µm, preferably from about 200 µm to about 750 µm, more preferably from about 250 µm to about 700 µm, and even more preferably from about 300 µm to about 600 µm.

In one embodiment, the cement may include one or more of Portland Type I cement, Portland Type II cement, Portland Type III cement, Portland Type IV cement and Portland Type V cement.

In one embodiment, the 3D printing concrete material composition may further include steel fibers or synthetic fibers to improve the material's toughness and ductility, thereby increasing its flexural strength. In one embodiment, the 3D printing concrete material composition may further include a defoamer, an expanding agent or any combinations thereof.

A defoamer is a chemical additive used to reduce or eliminate foam in a liquid. During concrete mixing, it can prevent excessive foam generation, ensuring the uniformity and stability of the 3D concrete material product.

An expanding agent is a chemical substance used to generate gas or an expansion effect in certain processes. It is commonly used in foamed concrete or lightweight concrete to reduce the concrete's self-weight and improve its thermal and sound insulation properties while maintaining structural strength. This expansion effect helps reduce the density of the 3D material product.

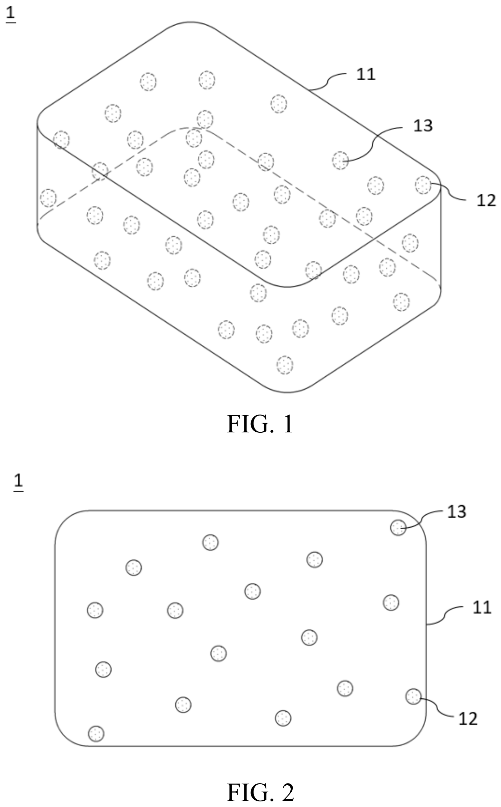

In one embodiment, the 3D printing concrete material composition of the disclosure is used to obtain a 3D printing product by 3D printing technology. As shown in FIGs. 1 and 2, the prepared 3D printed product 1 includes a body 11 with a predetermined shape and a plurality of porous structures 12 uniformly disposed inside the body 11. The 3D printing concrete material composition 13, including the binder, the filler and the additive, is distributed within the plurality of porous structures 12. In one embodiment, the predetermined shape may be a circle, a square, a cone, an arch, a sphere, a column, or any planar or three-dimensional shape designed according to requirements. In one embodiment, the 3D printed product 1 may be a non-building structural object, such as furniture, landscaping, a customized complex shape, a permanent formwork and a dry-type hung piece.

In one embodiment, the 3D printing technology may include extrusion-based printing, in which the 3D printing concrete material composition is extruded through a mechanical nozzle and stacked layer by layer to construct a structure. The 3D printing concrete material composition of this embodiment possesses rapid setting and self-supporting properties to maintain stacking stability, making it suitable for large structures such as walls, floors, columns, and building shells. It offers fast construction speed, making it suitable for continuous printing projects. It can manufacture hollow structures and complex geometries.

### Examples

### Experimental materials

### Formula 1

In this embodiment, the 3D printing concrete material composition may be composed of the binder, the filler, and the additive. In particular, the binder includes: cement, which is present in an amount of from 30 wt% to 40 wt% of the total weight of the 3D printing concrete material composition; and silica fume, which is present in an amount of from 8 wt% to 15 wt% of the total weight of the 3D printing concrete material composition. The filler includes: quartz powder, which is present in an amount of from 8 wt% to 15 wt% of the total weight of the 3D printing concrete material composition; and quartz sand, which is present in an amount of from35 wt% to 45 wt% of the total weight of the 3D printing concrete material composition. The particle size distribution of the quartz sand is approximately 300 µm to 600 µm, and the particle size distribution of the quartz powder is in the range of 30 µm to 40 µm. The additive includes: a carboxylic acid water-reducing agent, which is present in an amount of from 0.5 wt% to 2.5 wt% of the total weight of the binder; a dispersant, which is present in an amount of from 0.1 wt% to 0.8 wt% of the total weight of the binder; a viscosity modifier, which is present in an amount of from 0.5 wt% to 1.5 wt% of the total weight of the binder; a stabilizer, which is present in an amount of from 0.05 wt% to 0.15 wt% of the total weight of the binder; and an accelerator, which is present in an amount of from 0.5 wt% to 5 wt% of the total weight of the binder.

The 3D printing concrete material composition of this embodiment is based on ultra-high performance concrete (UHPC) material, and its properties are modified through additives to achieve the workability required for 3D printing, while ensuring that the finished product also retains the high compressive strength inherent to UHPC. The 3D printing concrete material composition of this embodiment includes the carboxylic acid water-reducing agent and the accelerator. The carboxylic acid water-reducing agent, which may include an early-strength type carboxylic acid water-reducing agent, not only reduces the required amount of mixing water, thereby increasing the concrete strength, but also accelerates the rate of the hydration reaction. This leads to faster formation and an increased quantity of calcium silicate hydrate (C-S-H) gel, which in turn results in a shortened setting time. The accelerator also serve to shorten the setting time of the concrete material composition and effectively increase the stability of the deposited material during 3D printing stacking process.

### Formula 2

In this embodiment, the 3D printing concrete material composition may be composed of the binder, the filler, and the additive. In particular, the binder includes: cement, which is present in an amount of from 40 wt% to 55 wt% of the total weight of the 3D printing concrete material composition; and silica fume, which is present in an amount of from 2 wt% to 8 wt% of the total weight of the 3D printing concrete material composition. The filler includes: quartz powder, which is present in an amount of from 2 wt% to 7 wt% of the total weight of the 3D printing concrete material composition; and quartz sand, which is present in an amount of from 40 wt% to 50 wt% of the total weight of the 3D printing concrete material composition. The particle size distribution of the quartz sand is approximately 300 µm to 600 µm, and the particle size distribution of the quartz powder is in the range of 30 µm to 40 µm. The additive includes: a carboxylic acid water-reducing agent, which is present in an amount offrom 1.0 wt% to 3.0 wt% of the total weight of the binder; a dispersant, which is present in an amount of from 0.1 wt% to 0.8 wt% of the total weight of the binder; a viscosity modifier, which is present in an amount of from 0.1 wt% to 0.5 wt% of the total weight of the binder; a stabilizer, which is present in an amount of from 0 wt% to 0.07 wt% of the total weight of the binder; and an accelerator, which is present in an amount of from 0.5 wt% to 5 wt% of the total weight of the binder.

The 3D printing concrete material composition of this embodiment is based on ultra-high performance concrete material, and its properties are modified through additives to meet the workability required for 3D printing, and to give the finished product the inherent high strength of the ultra-high performance concrete. The 3D printing concrete material composition of this embodiment includes the carboxylic acid water-reducing agent and the accelerator. The carboxylic acid water-reducing agent may include an early-strength type carboxylic acid water-reducing agent, which helps to improve strength, while the accelerator effectively increases the stacking stability of 3D printing. Compared with Formula 1, the ratio of the water-reducing agent to the accelerator added in Formula 2 of this embodiment is increased, which can further shorten the setting time.

### Experimental methods and results

### Example 1

The following tests were conducted on the characteristics of the 3D printing concrete material composition containing Formula 1 or Formula 2, based on the evaluation indicators such as extrudability, flowability, constructability, and setting time. These characteristics are defined as follows.
Extrudability: The ability to prevent pipe blockage and material extrusion interruption.
Flowability: The material's good flowability before extrusion and stacking, facilitating the normal operation of the equipment's feeding system.
Constructability: The material's ability to maintain its structure and shape under its own weight and the gravity of the upper layers without support.
Setting time: The setting time of the material can be controlled within a range depending on the size of its geometric shape.

Table 1 shows the test results regarding properties of the freshly-mixed materials according to the aforementioned evaluation indicators. In these tests, extrudability and constructability tests were evaluated by visual observation, which is the currently accepted standard practice for these assessments. According to the experimental results in Table 1, the 3D printing concrete material compositions of these embodiments possess good freshly-mixed properties and meet the technical requirements. The extrusion test results showed that both Formula 1 and Formula 2 could be continuously extruded without clogging or significant tearing, meeting the observation standards. The flowability of both compositions fell within the standard range of 160~220 mm. The construction test showed that the material maintained a stable shape after extrusion without collapse, which also met the observation criteria. Furthermore, the setting times of this material were 86 minutes (Formula 1) and 61 minutes (Formula 2), respectively. Both are well within the required standard of less than 90 minutes, demonstrating the characteristic of adjustable setting time.

**Table 1. Properties of freshly mixed materials in the formulas of the disclosure**

| Characteristics | Formula 1 | Formula 2 | Technical Requirements^{(a)} |
|---|---|---|---|
| Extrudability | Continuous extrusion, no clogging, no obvious tearing | Continuous extrusion, no clogging, no obvious tearing | Observation |
| Flowability (mm) | 170-190 | 170-190 | 160-220 |
| Constructability | Stable shape after extrusion, no collapse | Stable shape after extrusion, no collapse | Observation |
| Setting time (min) | 86 | 61 | ≤ 90 |

| | | | |
|---|---|---|---|
| ^{(a)} Source: Standard of China Engineering Construction Standardization Association - | | | |

### Technical Specification for 3D Printing of Concrete T/CECS 786-2020

In the embodiments of the disclosure, the water-to-binder ratio, the types and proportions of mineral admixtures, and the combination and proportion of additives in the 3D printing concrete material composition are carefully selected and optimized. This is done to formulate the 3D printing concrete material composition that simultaneously meets the workability requirements of 3D printing and yields the product with the required compressive strength. In particular, the additives may include the accelerator, the carboxylic acid water-reducing agent, the dispersant and the viscosity modifier. The accelerator can speed up the concrete setting reaction. The carboxylic acid water-reducing agent, which can be early-strength carboxylic acid water-reducing agent, not only reduces the amount of mixing water, but also increases the reaction rate of the hydration reaction, thereby shortening the setting time. The dispersant reduces the mutual adsorption between particles, and the viscosity modifier alters the material flowability, indirectly affecting the setting time. By selecting and adjusting the proportions of the above-mentioned additives, this embodiment allows for the adjustment of the setting time. This ensures that the setting time of the mixed 3D printing concrete material composition can meet the concrete 3D printing technical specifications formulated by the China Association for Engineering Construction Standardization (CECS), as well as the various working characteristics required for actual 3D printing operations. Therefore, the setting time of the 3D printing concrete material composition in the embodiments of the disclosure is superior to the standard value and has the characteristic of adjustable time length.

### Example 2

Using the 3D printing concrete material composition of Formula 1 or Formula 2 above as the raw material for 3D printing technology, an extrusion-type layer-stacking 3D printing method was employed, and the production was performed using a gantry type machine. The experimental steps were as follows: bagged powder, water, and additives were mixed together until the mixture reached a suitable viscosity for printing. Then, the slurry was added to the hopper, and printing began.

The 3D printing concrete material composition of this embodiment contains at least the carboxylic acid water-reducing agent, which may be an early-strength type carboxylic acid water-reducing agent. The water-reducing agent reduces the amount of mixing water required. When the overall water content of the 3D printing concrete material composition is reduced, the compressive strength of the resulting product can be increased. In addition, the water-reducing agent increases the reaction rate of the hydration reaction, leading to faster formation and increased quantity of calcium silicate hydrate (C-S-H) gel. The more calcium silicate hydrates are formed in the 3D printing concrete material composition, the higher the compressive strength of the finished product prepared from this material will be. Furthermore, the 3D printing concrete material composition of this embodiment includes the binder containing silica fume. Silica fume, characterized by its low specific gravity and a high specific surface area, produces a calcium silicate hydrate gel that also has a low specific gravity and a high specific surface area. This allows the gel to more easily fill or make up the voids between cement and other larger particles. It also enhances the adhesion and cohesion among components, thereby contributing to the high compressive strength of the resulting product. Products, which use 3D printing concrete material composition of this embodiment is printed by 3D printing technology, exhibit excellent compressive strength and are resistant to fracture. The test results of its material mechanical properties are shown in Table 2.

**Table 2. Mechanical properties of the formulas of the disclosure**

| Test items | Formula 1 | Formula 2 | Technical requirement^{(a)} | |
|---|---|---|---|---|
| Standard specimen compressive strength (MPa) | 114.6 | 91.4 | Meets design requirements | |
| 3D printed specimen compressive strength (MPa) | 96.1 | 88.7 | | |
| Compressive strength reduction rate (%) | 16 | 3 | ≤ 20% | |
| Flexural strength (MPa) | 25.5 | 18.5 | -- | |
| Interlayer splitting strength (MPa) | 5.1 | 3.9 | C20 | 0.8 MPa |
| | | | C30 | 1.0 MPa |
| | | | C40 | 1.5 MPa |
| | | | C50 | 2.5 MPa |
| | | | C60 | 3.5 MPa |
| Interlayer bond strength (MPa) | 2.9 | 2.7 | ≥ 1.5 MPa | |

| | | | | |
|---|---|---|---|---|
| ^{(a)} Source: Standard of China Engineering Construction Standardization Association - | | | | |

### Technical Specification for 3D Printing of Concrete T/CECS 786-2020

### Comparative Example

Past research has shown that the layer-by-layer stacking effect produced during the printing process of 3D printing concrete (3DPC) significantly affects its mechanical properties. Compared to traditionally cast and filled concrete, 3D printing concrete exhibits unique directionality, causing its mechanical properties to vary depending on the printing path. With the same printed pattern, when the load is parallel to the interlayer bond surface, the compressive strength, splitting tensile strength, and flexural strength are lower. This is because the interlayer bond is relatively poor, creating a weak structural surface that allows cracks to propagate rapidly, leading to brittle failure. Conversely, when the load is perpendicular to the interlayer bond surface, the compressive strength, splitting tensile strength, and flexural strength are higher because there is no obvious weak interlayer structure to allow crack propagation when a crack occurs.

Comparative Example is from the literature "Mechanical Properties of 3D printing Concrete" published in Construction Knowledge Information, Issue 483, April 2023, in which one set of experimental results is used for comparison. The experimental materials and procedures are briefly described below. The water-to-binder ratio of the concrete materials used for the 3D printing specimens was fixed at 0.4, and different mortar volume ratios (B/S = 0.4, 0.5, 0.6, 0.7, and 0.8) were used for formula design and the fabrication of 3D printing and cast concrete specimens (cast specimen size 50mm*50mm*50mm). The influence of the mortar volume ratio on the printability and hardening properties of the 3D printing concrete was investigated. The printed specimens for the compressive strength test were 50mm*45mm*50mm specimens cut from 200mm*50mm*50mm strips printed by the 3D printer. During the compressive strength test, the 3D printing specimens were loaded in three different directions: Fx, Fy, and Fz.

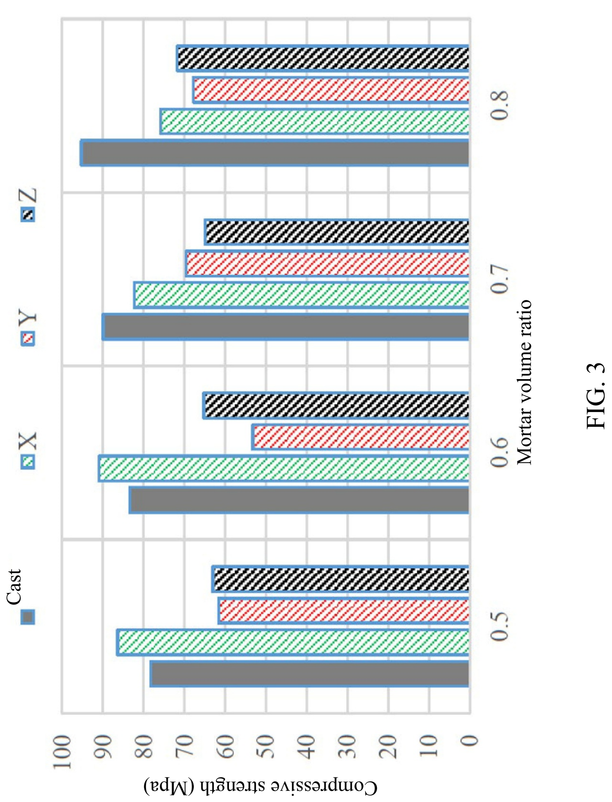

It should be noted that the test method for the compressive strength of 3D-printed specimens specified in the standard of China Engineering Construction Standardization Association - Technical Specification for 3D Printing of Concrete T/CECS 786-2020 is the same as the test method for testing compressive strength by applying pressure in the Z-direction as described in "Mechanical Properties of 3D printing Concrete" published in Construction Knowledge Information, Issue 483, April 2023. Therefore, the data results of different test specimens tested by these two methods can be compared. In other words, the Z-direction compressive strength data of Comparative Example shown in FIG. 3 can be compared with the compressive strength data of 3D-printed specimens of Formula 1 and Formula 2 listed in Table 2 of the specification.

The experimental results of Comparative Example are illustrated in FIG. 3, which is a bar chart showing the relationship between the mortar volume ratio and the compressive strength of the cast concrete and the 3D printing concrete of Comparative Example. Comparing the experimental results of Comparative Example shown in FIG. 3 with the contents of Table 2 of the disclosure, it can be found that the highest compressive strength of the cast concrete in FIG. 3 is approximately 95 MPa, which is significantly lower than the 114.6 MPa of the standard specimen compressive strength of Formula 1 in Table 2 of the disclosure, and only close to the 91.4 MPa of the standard specimen compressive strength of Formula 2 in the disclosure. Furthermore, the Z-direction compressive strength of the 3D printing concrete in FIG. 3 varies under different mortar volume ratios, with a minimum strength of 63 MPa and a maximum strength of approximately 71 MPa, both lower than the 96.1 MPa of Formula 1 and the 88.7 MPa of Formula 2 in Table 2 of the disclosure, indicating that the products made from the 3D printing concrete material compositions of the above embodiments through 3D printing have significantly better compressive strength than the prior art. This means that the products made from the 3D printing concrete material compositions of the above embodiments through 3D printing can maintain high structural strength, which helps to improve the load-bearing capacity and durability of the structure, such that the 3D printing concrete material compositions of the above embodiments have greater potential and advantages in 3D printing applications.

The disclosure provides the aforementioned 3D printing concrete material composition with high strength and excellent durability, which overcomes the problems of anisotropy and reduction rate in the mechanical properties of 3D printing concrete. Even with anisotropy and reduction rate, its mechanical properties are still superior to those of general 3D printing concrete materials, allowing for more diversified applications.

In summary, the products produced from the 3D printing concrete material composition of the disclosure through 3D printing exhibit significant advantages in mechanical properties. These performance improvements greatly reduce the maintenance requirements of the 3D printing concrete material composition of the disclosure during long-term use. Traditional concrete has high porosity and high water absorption, and is easily permeated by chloride ions, making traditional concrete objects susceptible to damage or corrosion when exposed to the natural environment for a long time. The 3D printing concrete material composition of the disclosure has enhanced durability due to its low porosity, low water absorption, extremely low air permeability and chloride ion permeability coefficient, which significantly reduces the maintenance cost and maintenance frequency of the objects made therefrom.

### Application examples

The 3D printing concrete material composition provided by the disclosure is used to create 3D printed objects. Currently, its main application is in the production of non-building structural objects, such as furniture, landscaping, customized complex shapes, permanent formwork, and dry-type externally-hung pieces. The following will briefly describe application examples of the disclosure.

### 〈〈Installation Artwork〉〉

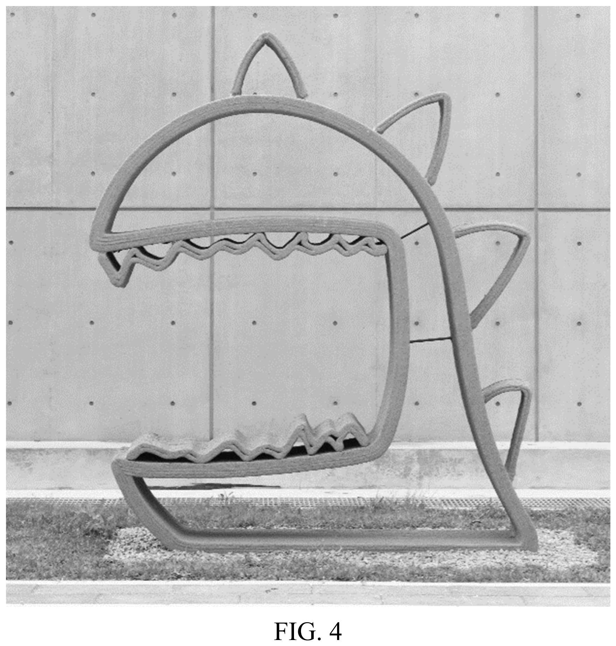

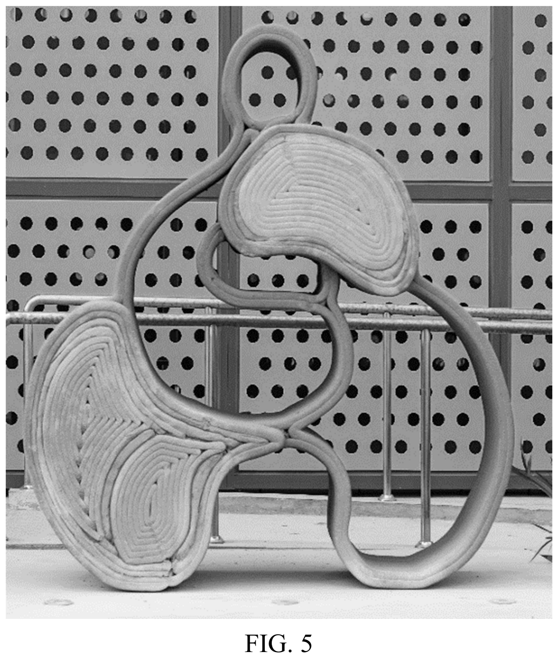

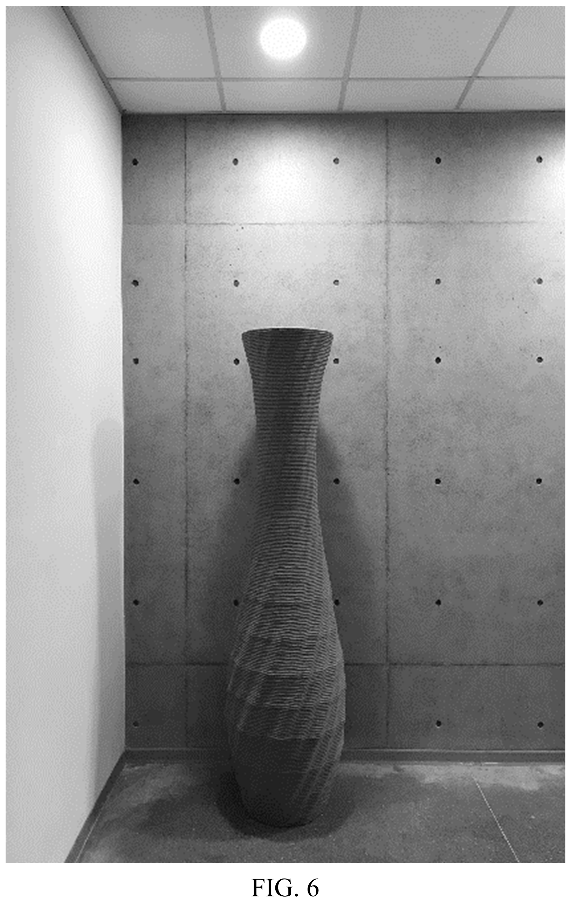

The disclosure proposes a 3D printing concrete material composition with excellent construction performance, including short setting time, high compressive strength, and good plasticity. It is particularly suitable for producing various large-scale, one-piece molded installation artworks, such as a three-meter-tall dinosaur (FIG. 4), a large-scale Tai Chi standing pose (FIG. 5), and a two-meter-tall spiral-shaped vase (FIG. 6). Compared with traditional cement products, the 3D printing concrete material composition of this embodiment provides significant technical advantages in the production of complex shapes, especially in terms of detail presentation and structural stability, far surpassing traditional cement products. These characteristics enable the 3D printing concrete material composition of this embodiment to efficiently and stably complete highly complex works of art and exhibit high potential for creative and aesthetic expression.

As shown in FIG. 4, the three-meter-tall dinosaur shape adopts a hollow structure in its design and includes multiple cantilever sections (such as the extended design of the upper row of teeth). Due to the good workability and extremely short setting time of the 3D printing concrete material composition of this embodiment, the designed pattern can be smoothly completed. In addition, because the 3D printing concrete material composition of this embodiment has superior compressive strength, the finished product, even with hollow structures and cantilever sections, can still be stably formed without collapsing. Furthermore, the 3D printing concrete material composition of this embodiment further includes steel fibers or synthetic fibers to improve the material's toughness and increase its bending strength, so that even if the product of this embodiment is as high as three meters, it can still be stably formed. Compared to traditional casting and molding processes, the 3D printing concrete material composition of this embodiment offers greater feasibility and efficiency, enabling the creation of more complex and exquisite structures, and significantly enhancing the possibilities for producing large-scale installation artworks.

As shown in FIG. 5, the large-scale Tai Chi standing pose is inspired by the imagery of the Tai Chi symbol, employing an alternating design technique of hollow and solid structures. This design requires extremely high precision and strength in the presentation of curves and lines. The 3D printing concrete material composition of this embodiment, due to its high precision and high strength, perfectly presents curves and lines, achieving artistic effects that traditional techniques cannot achieve.

As shown in FIG. 6, the design challenge of the two-meter-tall spiral-shaped vase lies in the rotational offset and gradual inward contraction or outward expansion variation of the printed outline of each layer, especially in the section where the vase body contracts at the lower and expands at the upper. Because the 3D printing concrete material composition of this embodiment possesses high compressive strength, even when a heavier layer of concrete material is stacked on top of the narrowest point of the bottle, with the stacking angle not perfectly perpendicular to the interlayer bonding surface, the compressive strength, splitting tensile strength, and flexural strength remain sufficiently high, which ensures that the printed product remains stable and does not collapse. Faced with such design challenges, the 3D printing concrete material composition of this embodiment successfully overcomes these technical difficulties with its excellent stability and precision. The precise connection of each printed layer ensures the stability of the spiral lines, resulting in a complex model with extremely outstanding visual effects and stable shape. This not only demonstrates the application potential of 3D printing technology in creating large and complex shapes but also proves the significant advantages of the 3D printing concrete material composition of this embodiment in achieving refined and dynamic designs.

### 〈〈Permanent Formwork〉〉

Concrete 3D printing technology is widely used for large objects due to its material properties and equipment requirements. In foreign countries, 3D printing concrete buildings can save labor and time costs, reduce carbon emissions and environmental pollution, and allow for more complex and customized designs. However, no country has yet established relevant standards and specifications for concrete 3D printing technology. According to practical applications in Japan, 3D printing concrete is applied to non-building structural objects, such as building formwork, to replace traditional formwork.

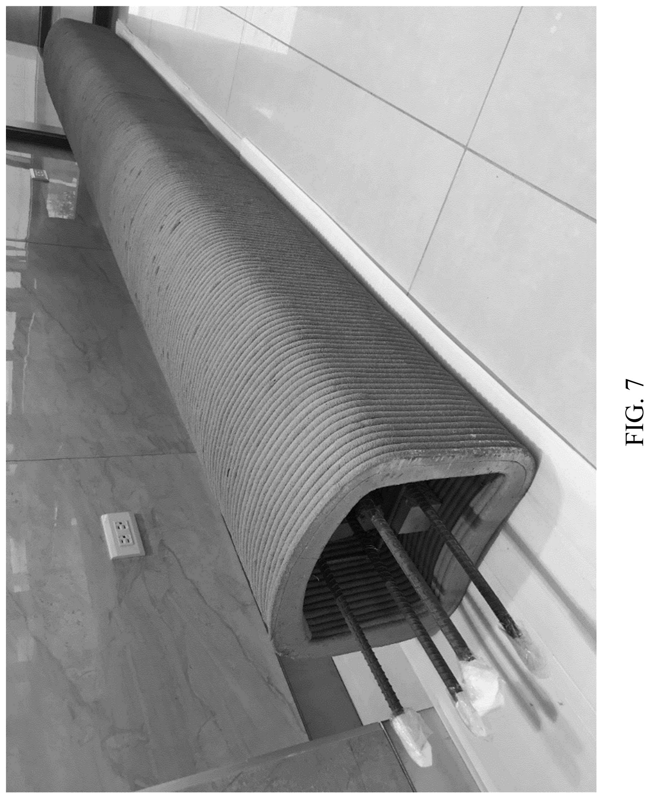

As shown in FIG. 7, this application example uses the 3D printing concrete material composition to create a column formwork that can be up to three meters high, is integrally formed, and has excellent grout leakage prevention properties. Once hardened, the steel cage can be placed directly and the concrete can be poured without the need for formwork removal, thus creating a permanent formwork. This feature not only simplifies the construction process but also ensures the overall stability of the structure, significantly improving the efficiency and environmental performance of building construction. Compared to traditional building materials, the 3D printing concrete material composition of this embodiment exhibits significant advantages in the formwork manufacturing process, because it does not affect the overall structure of the column, thereby improving the practicality and construction efficiency of the formwork, and can be widely used in engineering projects.

### 〈〈Dry-type externally-hung piece〉〉

The product design of the 3D printing concrete material composition of this embodiment currently focuses on non-building structural objects and modular design. Generally, dry-type sheets used on the exterior or interior of buildings are designed with two-dimensional shapes on a flat surface. However, the disclosure utilizes the free-form characteristics of 3D printing concrete, combined with the proportions of the 3D printing concrete material composition of this embodiment, to produce three-dimensional dry-type externally-hung pieces.

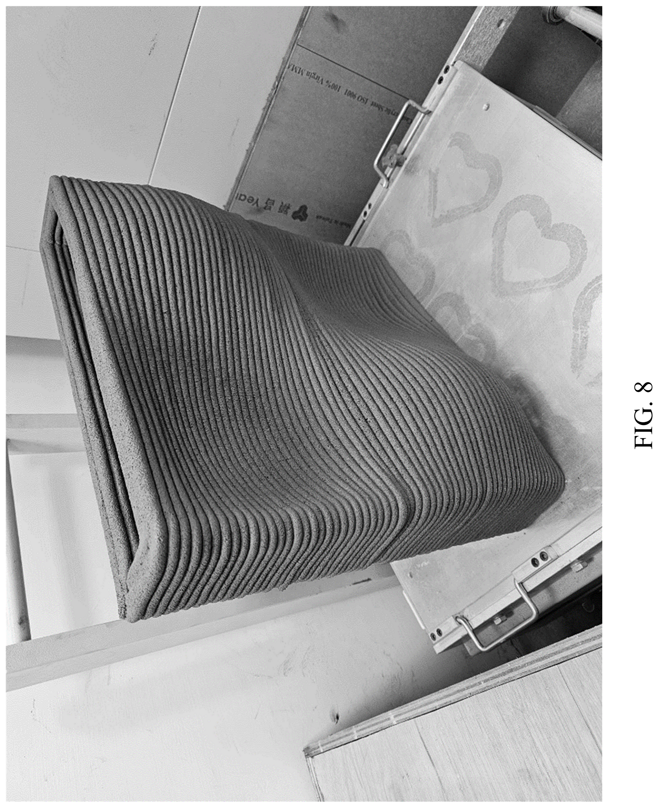

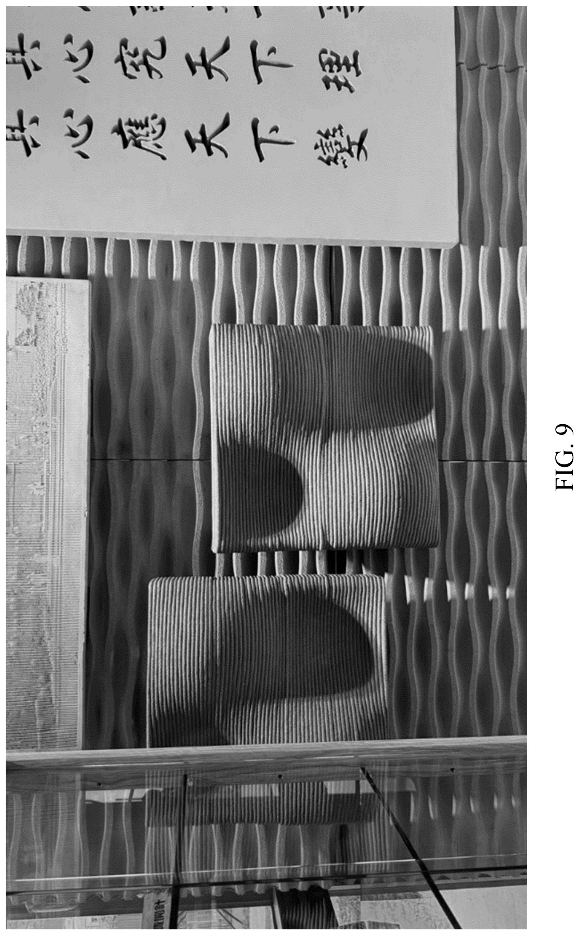

As shown in FIGs. 8 and 9, these illustrate how the 3D printing concrete material composition of this embodiment is combined with 3D printing technology to achieve three-dimensional dry-type externally-hung pieces. These pieces not only allow for modular and customized design based on the needs of architects or designers, but also provide more diverse visual presentation options for building exteriors, enhancing the overall aesthetics and creativity. Compared to traditional flat dry pieces, the dry-type pieces shown in FIGs. 8 and 9 have a wavy surface. Because the 3D printing concrete material composition of this embodiment has a shorter setting time and higher compressive strength, it possesses sufficient compressive strength even when its load is not completely perpendicular to the interlayer bonding surface, ensuring the finished product can support its shape without collapsing. This allows for a more aesthetically pleasing appearance and offers more diverse structural design possibilities.

### 〈〈 Customized Complex Shapes〉〉

The 3D printing concrete material composition of this embodiment, combined with concrete 3D printing technology, can create complex shapes and effectively eliminates traditional mold-making, filling, and demolding processes, thereby achieving high-efficiency production by replacing manual labor with machines.

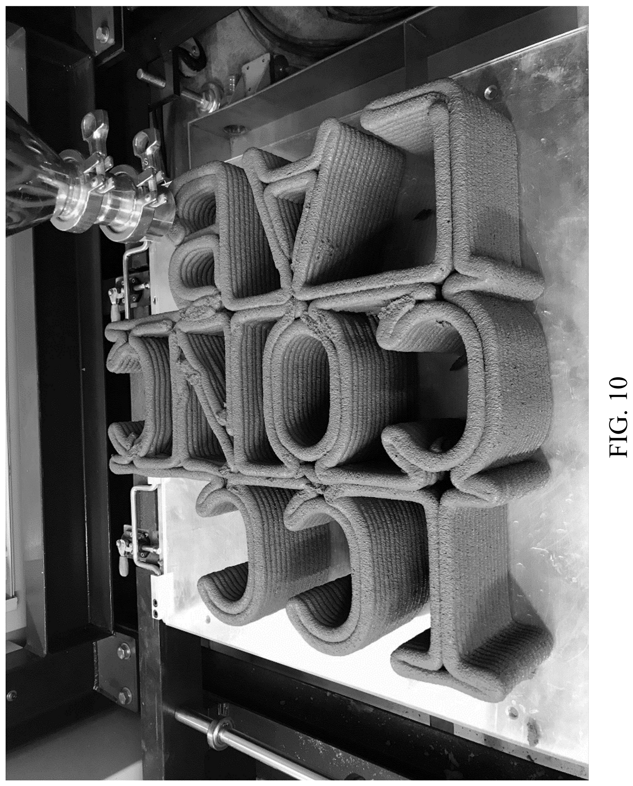

As shown in FIG. 10, the 3D printing concrete material composition of this embodiment can produce intricate three-dimensional Chinese and English text when used for 3D printing. Compared to the decorative items or formworks of the above embodiments, text patterns typically have more complex bends within a fixed volume. Observing the finished product, it is found that the surface is smooth and continuous without tensile cracks or breaks, indicating that the 3D printing concrete material composition of this embodiment has excellent workability. It flows smoothly in the feeding system, and the extrusion is smooth without interruption or blockage. After extrusion, it can still maintain its own structure without deformation even without moldboard support. In particular, its excellent extrusion performance ensures the stability of the continuous extrusion process without tearing, making the production of complex text or patterns simple and stable.

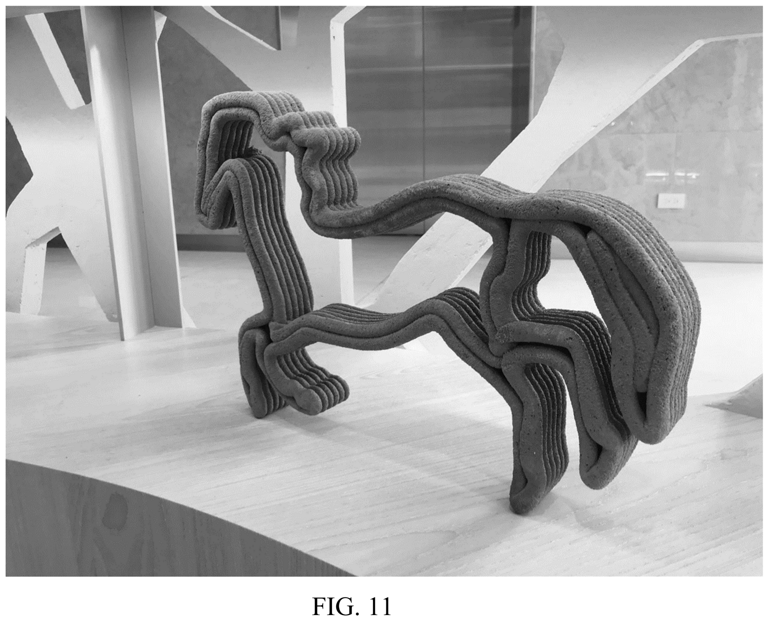

Furthermore, as shown in FIG. 11, the 3D printing concrete material composition of this embodiment can also be used to produce diverse cultural and creative items such as animal and plant shaped garden ornaments or shaped potted plants, demonstrating its wide application potential in the fields of customization and creative design.

In summary, the 3D printing concrete material composition provided by the disclosure can be used to 3D printed objects and can be applied to various non-building structural objects. Therefore, the 3D printing concrete material composition of this embodiment can be developed towards diversified design and application fields.

In 3D printing concrete technology, the optimal ratio is selected through different applications to maximize benefits. To optimize the ratio of the 3D printing concrete material composition of this embodiment, strength is the primary consideration in ratio control. Continuous research into related material technologies is being conducted to improve its compressive strength performance, aiming to meet various challenges in future diversified applications. In addition to the above-mentioned optimization of existing ratios, in terms of environmental protection and carbon reduction, the 3D printing concrete material composition of this embodiment can further utilize materials including waste from various industrial categories to achieve purposes such as waste removal etc.

Many features and advantages of the disclosure are apparent from the above detailed description. Therefore, the appended claims are intended to cover all features and advantages of the disclosure that fall within the true spirit and scope of the disclosure. Furthermore, since many modifications and variations will readily conceive of by those skilled in the art, the disclosure is not limited to the specific processes, constructions, and operations shown and described, and all suitable modifications and equivalents fall within the scope of the disclosure.

Moreover, those skilled in the art will understand that the concepts upon which the disclosure is based can readily serve as the basis for designing other methods, structures and systems for achieving the various objectives of the disclosure. Therefore, the scope of the patent application should not be considered limited by the foregoing description.

## Claims

1. A 3D printing concrete material composition, comprising:
a binder, comprising cement and silica fume;
a filler, comprising quartz powder and quartz sand; and
an additive, comprising a carboxylic acid water-reducing agent and an accelerator, wherein
the carboxylic acid water-reducing agent is present in an amount of from about 0.5 wt% to about 3.0 wt% of a total weight of the binder; and
the accelerator is present in an amount of from about 0.5 wt% to about 5 wt % of the total weight of the binder.

2. The 3D printing concrete material composition according to claim 1, wherein the binder comprises:
the cement being present in an amount from about 25 wt% to about 55 wt% of a total weight of the 3D printing concrete material composition, and
the silica fume being present in an amount of from about 1 wt% to about 15 wt% of the total weight of the 3D printing concrete material composition.

3. The 3D printing concrete material composition according to claim 1 or 2, wherein the filler comprises:
the quartz powder being present in an amount of from about 1 wt% to about 20 wt% of the total weight of the 3D printing concrete material composition; and
the quartz sand being present in an amount of from about 30 wt% to about 60 wt% of the total weight of the 3D printing concrete material composition.

4. The 3D printing concrete material composition according to any one of claims 1-3, wherein the quartz powder has a particle size distribution ranging from about 10 µm to about 80 µm.

5. The 3D printing concrete material composition according to any one of claims 1-4, wherein the quartz sand has a particle size distribution ranging from about 150 µm to about 800 µm.

6. The 3D printing concrete material composition according to any one of claims 1-5, wherein the additive further comprises:
a dispersant, being present in an amount of from about 0.1 wt% to about 0.8 wt% of the total weight of the binder;
a viscosity modifier, being present in an amount of from about 0.1 wt% to about 2.0 wt% of the total weight of the binder; and
a stabilizer, being present in an amount of from about 0 wt% to about 0.3 wt% of the total weight of the binder.

7. A product, comprising:
a body having a predetermined shape; and
a plurality of porous structures, uniformly disposed inside the body and having the 3D printing concrete material composition according to claim 1 distributed therein.

8. The product according to claim 7, wherein the predetermined shape comprises a circle, a square, a cone, an arch, a sphere, a column, or any planar or three-dimensional shape designed according to requirements.

9. The product according to claim 7 or 8, wherein the product is a non-building structural object.

10. The product according to claim 7, 8 or 9, wherein the product is an installation artwork, a permanent formwork or a dry-type externally-hung piece.

11. A method for manufacturing a product, comprising using the 3D printing concrete material composition according to claim 1 to print the product by 3D printing technology.
